# EUROPEAN PATENT APPLICATION

(11) **EP 4 664 148 A1**
(43) Date of publication of application: **17.12.2025**
(21) Application number: 25182571.7
(22) Date of filing: 13.06.2025
(51) Int. Cl.: G01S 7/48, G01S 17/42, G01S 17/931

(54) **DATA PROCESSING SYSTEMS AND METHODS FOR A MATERIAL HANDLING VEHICLE**

(30) Priority: 13.06.2024 US 202463659531 P
(71) Applicant: The Raymond Corporation, Greene, NY 13778 (US)
(72) Inventor: D'ACCOLTI, Anthony V., Manlius, NY (US); KETCHUM, Robert J., El Granada, CA (US); MAHON, Alexander, Binghamton, NY (US)
(74) Representative: Zacco Sweden AB

(57) **Abstract**

A method (500) of filtering a data set generated by a sensor (110) on a material handling vehicle (100) includes receiving a series of data points (310)from the sensor (110) on the material handling vehicle (100), mapping each data point in the series of data points (310) to a cell (305) of a voxel grid (300), determining a number of data points within each cell (305) of the voxel grid (300), and comparing the number of data points within each cell (305) of the voxel grid (300) to a threshold value to reduce the number of data points. When the number of data points within a cell (305) of the voxel grid (300) is below the threshold value, the cell (320) of the voxel grid is marked as unoccupied. When the number of data points within a cell (305) of the voxel grid (300) is equal to or above the threshold value, the cell (340) of the voxel grid (300) is marked as occupied.

## Description

### CROSS-REFERENCE TO RELATED APPLICATIONS

This application claims the benefit of U.S. Provisional Application No. 63/659,531, filed June 13, 2024, which is hereby incorporated by reference in its entirety.

### BACKGROUND

Currently, the implementation of simultaneous localization and mapping (SLAM) or obstacle detection systems in material handling vehicles may generate large amounts of data, which current hardware systems may struggle to parse. Particularly, when using distance-based sensors such as 3D light detection and ranging (LiDAR) sensors, a large amount of data may be generated. Thus, as a result of the large amount of data generated, current SLAM or obstacle detection systems utilizing distance-based sensors such as 3D LiDAR sensors may have limited functionality when using current hardware systems.

### SUMMARY

According to one aspect of the present disclosure, a method of filtering a data set generated by a sensor on a material handling vehicle can be provided. The method can include receiving a series of data points from the sensor on the material handling vehicle. Each data point in the series of data points can be mapped to a cell of a voxel grid. A number of data points within each cell of the voxel grid can be determined. The number of data points within each cell of the voxel grid can be compared to a threshold value to reduce the number of data points. When the number of data points within a cell of the voxel grid is below the threshold value, the cell of the voxel grid can be marked as unoccupied. When the number of data points within a cell of the voxel grid is equal to or above the threshold value, the cell of the voxel grid can be marked as occupied.

In some examples, the threshold value can be adjusted based on a distance of each cell from the sensor.

In some examples, cells further from the sensor can have a lower threshold value than cells nearer to the sensor.

In some examples, when the number of data points within the cell of the voxel grid is below the threshold value, the cell can be marked unoccupied even when data points are present within the cell.

In some examples, the sensor can be a 3D LiDAR sensor.

In some examples, the method can further include applying the reduced data set to an obstacle detection system of a material handling vehicle to determine whether an obstacle is within a travel path of the material handling vehicle.

In some examples, the method can further include, when an obstacle is determined to be within the travel path of the material handling vehicle, modifying one or more load handling functions of the material handling vehicle.

In some examples, the method can further include determining a centroid point for each occupied cell based on an average location of data points within the occupied cell, and representing each occupied cell with the centroid point.

According to another aspect of the present disclosure, a guidance, navigation, and control system for a material handling vehicle can be provided. The system can include a sensor to measure obstacle detection data and a controller. The controller can be configured to receive obstacle detection data from the sensor in the form of a series of data points. The controller can map each data point in the series of data points to a cell of a voxel grid. The controller can determine a number of data points within each cell of the voxel grid. The controller can compare the number of data points within each cell of the voxel grid to a predetermined threshold value. When the number of data points within a cell of the voxel grid is below the threshold value, the controller can mark the cell of the voxel grid as unoccupied. When the number of data points within a cell of the voxel grid is equal to or above the threshold value, the controller can mark the cell of the voxel grid as occupied.

In some examples, the predetermined threshold value can be adjusted based on a distance of each cell from the sensor.

In some examples, cells further from the sensor can have a lower predetermined threshold value than cells nearer to the sensor.

In some examples, when the number of data points within the cell of the voxel grid is below the threshold value, the cell can be marked unoccupied even when data points are present within the cell.

In some examples, the sensor can be a 3D LiDAR sensor.

In some examples, a centroid point for each occupied cell can be determined based on an average location of data points within the occupied cell.

In some examples, the controller can be further configured to output occupied cell data to an obstacle detection system of the material handling vehicle to determine whether an obstacle is within a travel path of the material handling vehicle, and when an obstacle is determined to be within the travel path of the material handling vehicle, modify one or more load handling functions of the material handling vehicle.

According to yet another aspect of the present disclosure, a non-transitory computer-readable medium storing instructions can be provided. When executed by a processor, the instructions can cause the processor to perform a method for density-based filtering of point cloud data. The method can include receiving point cloud data from one or more sensors. A voxel grid filter can be applied to the point cloud data to divide the point cloud data into a plurality of cells. A number of data points within each cell of the plurality of cells can be determined. The number of data points within each cell can be compared to a variable threshold value, the variable threshold value being based on a distance of each cell from the one or more sensors. Cells with a number of data points equal to or greater than the threshold value can be designated as occupied cells. A reduced point cloud data set can be generated by representing each occupied cell with a single data point.

In some examples, cells further from the one or more sensors can have a lower predetermined threshold value than cells nearer to the one or more sensors.

In some examples, when the number of data points within the cell of the voxel grid is below the threshold value, the cell can be marked unoccupied even when data points are present within the cell.

In some examples, the method can further include applying the reduced data set to an obstacle detection system of a material handling vehicle.

In some examples, the reduced point cloud data set can have about 5-20 percent of the data points in the received point cloud data.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a diagrammatic view of a material handling vehicle, according to aspects of the present disclosure.
FIG. 2 is a diagrammatic view of a guidance, navigation, and control system of the material handling vehicle of FIG. 1, according to aspects of the present disclosure.
FIG. 3 is a diagrammatic view of one example illustration of a voxel grid filter, according to aspects of the present disclosure.
FIG. 4 is a diagrammatic view of another example illustration of a voxel grid filter including a density filter, according to aspects of the present disclosure.
FIG. 5 is a diagrammatic view of a data processing method using the voxel grid filter of FIG. 4, according to aspects of the present disclosure.
FIG. 6 is a diagrammatic view of a voxel map illustrating a distance-based density filtering system for use with the guidance, navigation, and control system of FIG. 2, according to aspects of the present disclosure.

### DETAILED DESCRIPTION

The following discussion is presented to enable a person skilled in the art to make and use embodiments of the invention. Given the benefit of this disclosure, various modifications to the illustrated embodiments will be readily apparent to those skilled in the art, and the principles herein can be applied to other embodiments and applications without departing from embodiments of the invention. Thus, embodiments of the invention are not intended to be limited to embodiments shown, but are to be accorded the widest scope consistent with the principles and features disclosed herein.

The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

It is also to be appreciated that material handling vehicles are designed in a variety of classes and configurations to perform a variety of tasks. It will be apparent to those of skill in the art that the present disclosure is not limited to any specific material handling vehicle, and can also be provided with various other types of material handling vehicle classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

It should be noted that the various material handling vehicles listed above may perform a variety of load handling functions. For example, the material handling vehicles and/or the load handling portion (e.g., forks, mast, and/or fork carriage, etc.) of the material handling vehicles may be operated to move the forks up and down, tilt, reach (e.g., move the forks in and out), rotate, travel (e.g., move the material handling vehicle), and/or any combination thereof to complete a load handling function.

As should be noted, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

In one example, a guidance, navigation, and control system (e.g., including one or more processors, etc.) for a material handling vehicle may be configured to receive data from one or more sensors (e.g., one or more sensors located on the material handling vehicle) for obstacle detection or simultaneous localization and mapping (SLAM) applications. In some examples, the sensors may be 3D light detection and ranging (LiDAR) sensors used for obstacle detection applications.

In one example, the amount of data received from the sensor(s) by the guidance, navigation, and control system may be too large for efficient data processing. Thus, a voxel grid filter (e.g., including a density-based filter) may be used to reduce the overall number of data points (e.g., from a point cloud) generated by the sensor(s). In one particular example, the voxel grid filter may reduce the number of data points in a particular cell (e.g., voxel) down to a single point, while the density-based filter may mark (e.g., represent) cells with less than a predetermined number of data points as unoccupied cells. Correspondingly, the density-based filter may mark (e.g., represent) cells with greater than or equal to the predetermined number of data points as occupied cells. Thus, as a result, the total number of data points that may be processed by the controller may be significantly reduced (e.g., by about 90 percent of the original point cloud), or more or less.

In another example, in addition to the density-based filter, a distance-based filter may be used to further reduce the point cloud. In some examples, the distance-based filter may permit the use of a variable threshold value (e.g., threshold number of data points) within a voxel to represent the voxel as occupied or unoccupied. In some examples, the variable threshold values may be based on the distance of the object from the sensor (e.g., on the material handling vehicle). Thus, the variable threshold may account for beam divergence (e.g., from the sensor) by increasing the sensitivity for objects that are further from the sensor and decreasing the sensitivity for objects that are closer to the sensor. Put differently, the density-based filtering mentioned previously may adjust the number of data points needed to mark a cell as occupied depending on the distance of the object from the sensor. Thus, objects nearer to the sensor may need a larger number of data points to be marked as occupied, while objects farther from the sensor may need a smaller number of data points to be marked as occupied (e.g., to account for beam divergence, etc.). As should be appreciated, this level of parameterization is not possible with traditional voxel filtering systems and methods, which typically utilize a uniform number of data points (e.g., to count as an occupied cell) regardless of location, density, etc.

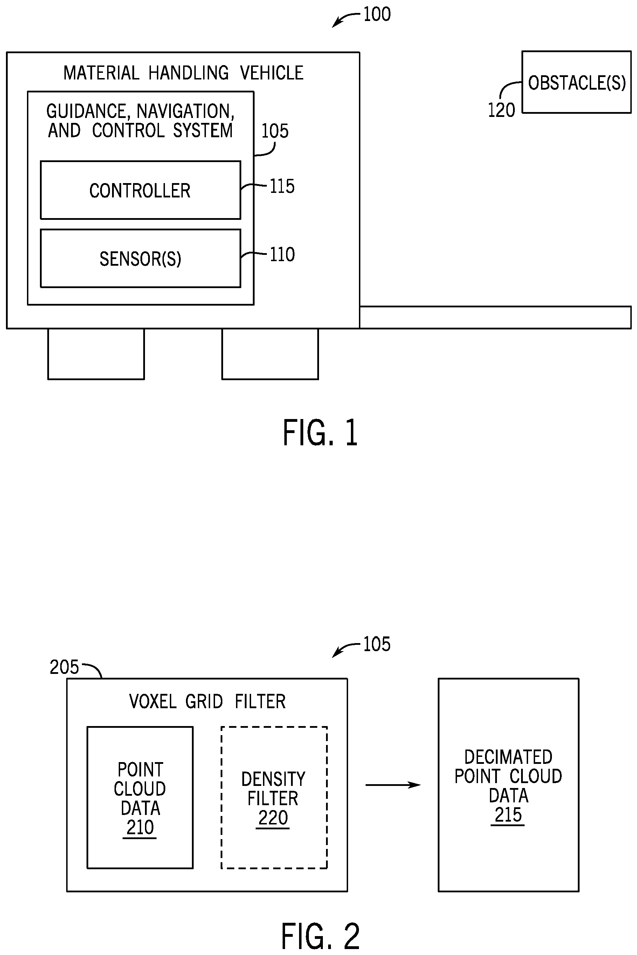

FIG. 1 illustrates an example of a material handling vehicle 100, which may include a guidance, navigation and control system 105. In some examples, the material handling vehicle 100 may be in the form of an operator-operated vehicle, an autonomously-operated vehicle, a remote-operated vehicle, or any combination thereof. In one example, the material handling vehicle 100 may be configured to operate in an autonomous mode when no operator is present on the material handling vehicle 100 and configured to operate in an operator mode when an operator is present on the vehicle. Correspondingly, in some examples, the material handling vehicle 100 may be remotely operated by an operator when no operator is present on the material handling vehicle 100.

In one example, the guidance, navigation, and control system 105 may be used to facilitate simultaneous localization and mapping (SLAM) of the material handling vehicle 100 within a warehouse or other environment. In other examples, the guidance, navigation, and control system 105 may be used to facilitate obstacle detection within a warehouse or other environment. In some examples, the guidance, navigation, and control system 105 may include a controller 115 (e.g., including a processor and a memory), which may be in communication (e.g., wired, or wireless communication) with one or more sensors 110 of the material handling vehicle 100. In some examples, the sensors 110 may include 3D light detection and ranging (LiDAR) sensors, which may determine the presence of one or more obstacles 120 in a path of or around the material handling vehicle 100. Correspondingly, the 3D LiDAR sensors may be used in SLAM applications to generate a 3D map of the objects 120 around the material handling vehicle 100. In some examples, based on feedback from the sensors 110 and the guidance, navigation, and control system 105, the material handling vehicle 100 may be able to avoid obstacles 120 around the material handling vehicle 100 (e.g., when operating autonomously or otherwise). In other examples, the sensors 110 may include 2D LiDAR sensors, cameras, magnetic sensors, any other known obstacle detection sensors, or any combination thereof.

In one particular example, the guidance, navigation, and control system 105 may utilize data from the sensors 110 to generate a 3D map of the obstacles 120 around the material handling vehicle 100, while also determining a location of the material handling vehicle 100 with respect to the obstacles 120 (e.g., using SLAM). However, in some cases, as mentioned previously, the influx of data (e.g., point cloud data) generated by the sensors 110 (e.g., 3D LiDAR sensors) may be too large for the controller 115 to handle. Thus, the data set generated by the sensors 110 may be reduced via the use of a voxel grid filter to facilitate data processing by the controller 115. In one example, the use of the voxel grid filter may reduce the data set from the sensors 110 (e.g., point cloud data) by about 80 to 95 percent, or more or less.

FIG. 2 shows an example of the guidance, navigation, and control system 105, which may utilize a voxel grid filter 205 to reduce (e.g., decimate) point cloud data 210 generated by the sensors 110 (e.g., 3D LiDAR sensors). Put differently, as the sensors 110 continually generate data points in response to the detection of obstacles 120, the data points may create a point cloud (e.g., formed from point cloud data 210), which may correspond to the location of the obstacles 120 relative to the material handling vehicle 100. However, as mentioned previously, the point cloud data 210 may be a significantly large dataset, which may be difficult for the controller 115 to parse. Thus, the point cloud data 210 may be ran through the voxel grid filter 205 to reduce the dataset (e.g., in the form of decimated point cloud data 215). As a result, the decimated point cloud data 215 may be a smaller data set than the original point cloud data 210, while still retaining the integrity of the point cloud data 210. Thus, the controller 115 may be able to parse the decimated point cloud data 215, without overreaching the performance characteristics of the controller 115 (e.g., temperature, current draw, etc.).

In one particular example, the voxel grid filter 205 may further include a density filter 220. The density filter 220 may be configured to determine the number of data points within each voxel (e.g., cell) and, if the number of data points is below a predetermined value, may mark the voxel as unoccupied. Correspondingly, if the number of data points within each voxel is above the predetermined value, the density filter 220 may mark the voxel as occupied. In some examples, the voxel grid filter 205 may then combine the data points within the voxel into a single centroid point (e.g., based on the average location of the data points in the voxel). In another example, the data points within the voxel may be combined into a single central point (e.g., in the center of the voxel or offset based on an averaged location of the data points in the voxel). As should be appreciated, the voxel grid filter 205 and the density filter 220 work together to reduce the data set from a series of points per voxel to either a single point or no (e.g., zero) points per voxel, respectively. Thus, the overall number of data points in the point cloud data 210 may be reduced (e.g., to the decimated point cloud data 215) by about 80 to 95 percent, or more or less, which may facilitate parsing of the decimated point cloud data 215 by the controller 115 of the material handling vehicle 100.

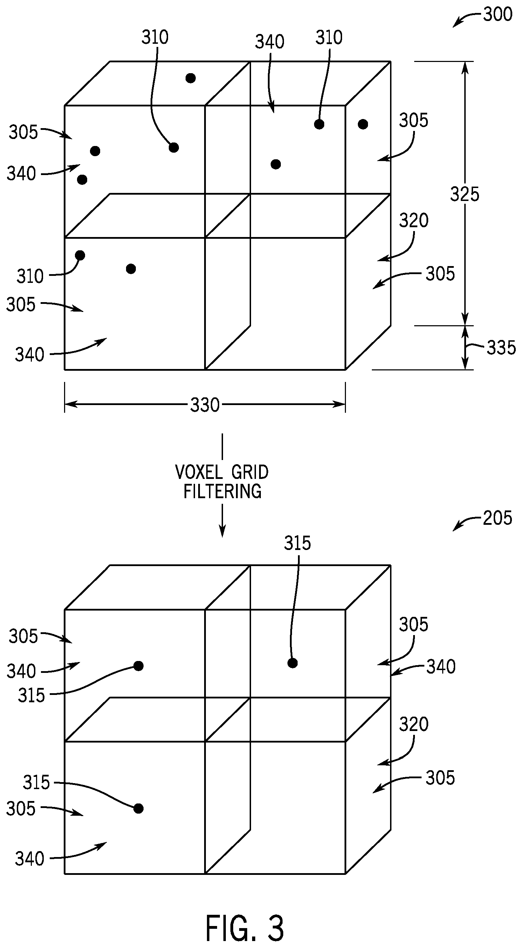

FIG. 3 depicts one example illustration of a voxel grid 300 that may be used to illustrate the use of the voxel grid filter 205. In one example, the voxel grid 300 may be implemented as a 3D matrix with elements of combined height 325, width 330, and depth 335 (e.g., forming a cuboid shape). In some examples, the cuboid shape can be a tall rectangular shape. In some examples, the height 325, width 330, and depth 335 may each be represented by a variable (e.g., i, j, and k, respectively). For example, the number associated with each variable (e.g., i, j, k) may correspond to the number of cells (e.g., voxels) 305 needed to cover the surface area of that dimension of the voxel grid 300. For example, given that i=j=k=10, ten (10) individual cells 305 may be needed per each dimension to cover each of the height (i), width (j), and depth (k) of the voxel grid 300.

Further, each of the cells 305 may include a predetermined dimensionality (e.g., a "leaf size"), which describes the dimensions (e.g., height, width, depth) of each cell (e.g., cuboid cell). For example, if the leaf size for the cells 305 per each dimension is 0.5 meters and i=j=k=10, then as the number of cells 305 needed to cover each dimension (e.g., i, j, k) of the voxel grid 300 is 10 cells 305, and the dimensionality of each cell (e.g., in the height, width, and depth) is 0.5 meters, the total dimensions of the voxel grid 300 is 5m x 5m x 5m, with a total of ten (10) individual cells 305 per each dimension.

In one example, the controller 115 may review how many data points 310 are within each of the cells 305 to determine whether each cell 305 is an occupied cell 340, which includes one or more data points 310, or is an unoccupied cell 320, without any data points 310. If the cell 305 is an unoccupied cell 320, then the controller 115 may ignore that particular cell. However, if the cell 305 is an occupied cell 340, then the controller 115 may average the location of the data points 310 within the cell 340 (e.g., into a single centroid point) 315.

Additionally, the controller 115 may generate the centroid point 315 within each occupied cell 340, which is based on an average location of the data points 310 in the cell 340. For example, the controller 115 may combine the data points 310 within the occupied cell 340 into a single centroid point (e.g., based on the location of the data points in the voxel), which may be offset from the center of the cell 340 based on the average location of the data points 310 in the cell 340. In another example, the data points 310 within the cell 340 may be combined into a single central point (e.g., in the center of the cell 340). Thus, the controller 115, using the voxel grid filter 205, may reduce the overall number of data points in each cell 340 to a single point, which reduces the overall number of data points in the point cloud data 215.

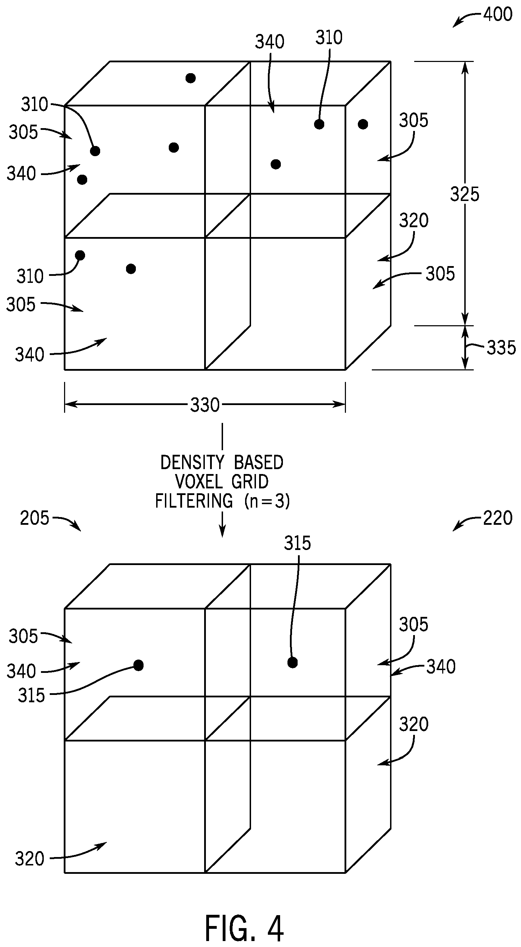

FIG. 4 depicts another example illustration of a voxel grid 400 that may be used to illustrate the use of the voxel grid filter 205 and the density filter 220. As will be recognized, the voxel grid 400 shares a number of components in common with and operates in a similar fashion to the examples illustrated and described previously (e.g., the voxel grid 300). For the sake of brevity, these common features will not be again described below in detail. Rather, previous discussion of commonly named or numbered features, unless otherwise indicated, also applies to example configurations of the voxel grid 400.

In one example, through the addition of the density filter 220, the voxel grid filter 205 may be able to further reduce the number of data points 315 that are sent to the controller 115. Further, through the use of the density filter 220, the potential impact of errant sensor readings (e.g., due to noise, interference, etc.) may be mitigated, which may increase the overall accuracy of the guidance, navigation, and control system 105. For example, the density filter may be used to determine whether or not each cell 305 includes more or less data points 310 than a predetermined threshold value (n). In one example, if the number of data points 310 in a particular cell 305 is above (e.g., greater than or equal to) the threshold value (n), which may be a predetermined value set by an operator or otherwise stored on the controller 115, then the cell 305 is said to be an occupied cell 340. In another example, if the number of data points 310 in the cell 305 is below (e.g., less than) the threshold value (n), then the cell 305 is said to be an unoccupied cell 320.

In one particular example, as illustrated in FIG. 4, the threshold value (n) may be three (3) data points 310 (i.e., n=3) for a cell 305 to count as an occupied cell 340. Thus, any cells 305 that have three (3) or more data points 310 may be considered occupied cells 340. Correspondingly, any cells 305 that have less than three (3) data points 310 may be considered unoccupied cells 320. Thus, using the density filter 220 may permit density-based voxel filtering, which may further reduce the number of data points in the point cloud data 210. As should be appreciated, the threshold value (n) may be set to any value depending on the use case. For example, having a larger threshold value (n) may correspond to a less sensitive voxel grid filter (e.g., less total data points), which may reduce the effects of noise on the guidance, navigation, and control system 105. Correspondingly, a smaller threshold value (n) may correspond to a more sensitive voxel grid filter (e.g., more total data points).

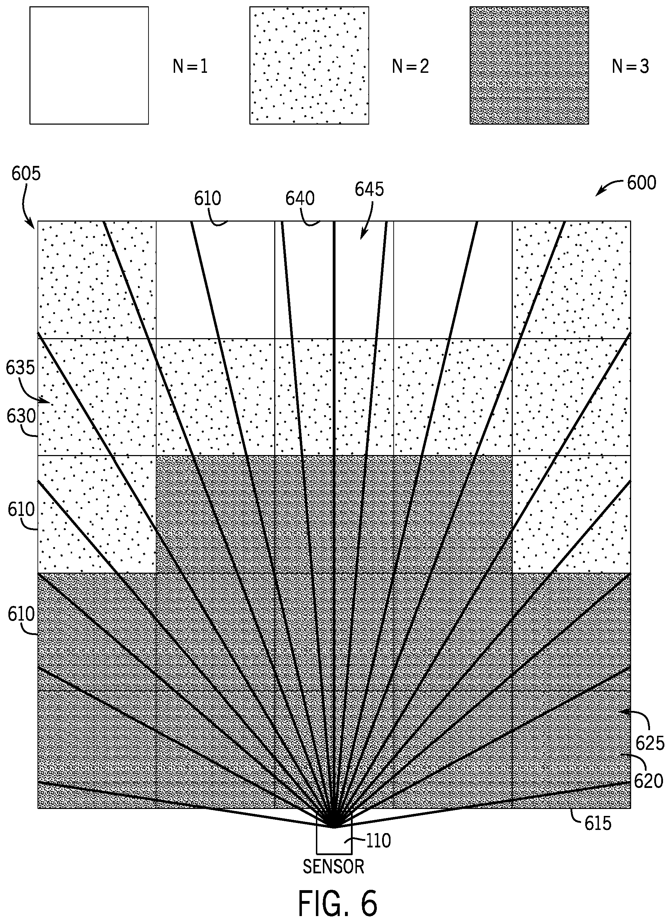

Thus, in some cases, it may be beneficial to parameterize the threshold value (n) based on the leaf size of each cell 305 and the overall geometry of the voxel grid 400. Furthermore, the threshold value (n) can be set independently for each cell within the voxel grid. For example, as shown in FIG. 6, the threshold value (n) may be larger for cells nearer to the sensor 110 and smaller for cells further from the sensor 110 (e.g., to account for beam divergence, etc.). Additionally, for use in SLAM applications, a consideration of the total number of extracted features, points, and total localization confidence can be used to further enhance the tuning sensitivity of the algorithm (e.g., the threshold value (n)). Correspondingly, in obstacle detection applications, where tall rectangular cuboids may be used, the density-based voxel filter permits decimation (e.g., a reduction) along a geometric area that is a superset of the travel path for accuracy evaluation with low computational complexity as compared to evaluating each point in the point cloud data 210.

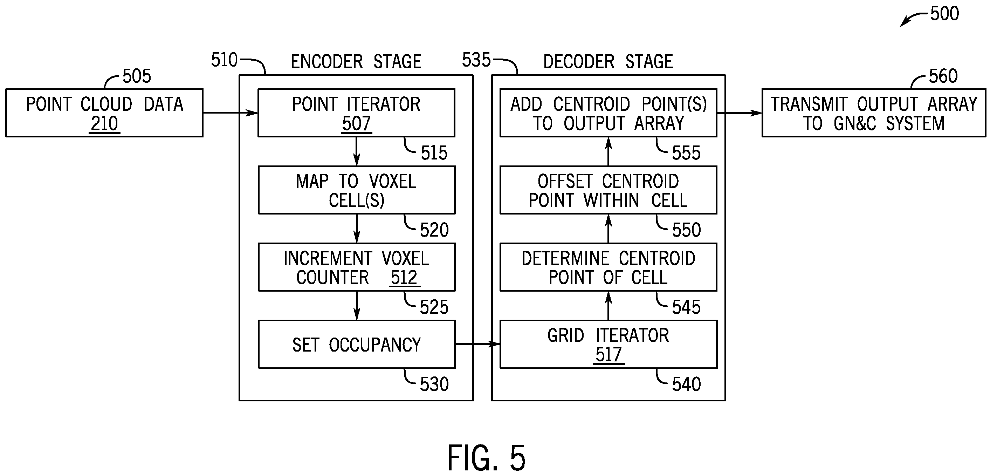

Referring now to FIG. 5, a method 500 is illustrated for decimating (e.g., reducing) the point cloud data 210 using the voxel grid filter 205 including the density filter 220, according to some aspects of the disclosure. The method 500 can be used with the point cloud data 210 (e.g., from the sensors 110) and the voxel grid filter 205 including the density filter 220 and may be particularly useful in reducing the point cloud data 210 versus previously-used methods. While the method 500 is described with reference to the guidance, navigation, and control system 105 of the material handling vehicle 100 discussed above, the method can also be used with other types of guidance, navigation, and control systems for a variety of uses. Additionally, operations of the method 500 need not be carried out in the specific order discussed below and, in some cases, may be implemented with other control devices and systems not explicitly described herein. Generally, the method 500 can be implemented using a variety of known general purpose control devices (e.g., the controller 115), or can be implemented using special-purpose control devices constructed according to known principles to implement the concepts disclosed herein.

With continued reference to FIG. 5, at stage 505, the sensors 110 (e.g., 3D LiDAR sensors) may generate a series of data points in the form of point cloud data 210, which may represent the position of one or more obstacles 120 around the material handling vehicle 100. At the encoder stage 510, the data points forming the point cloud data 210 may pass through a point iterator 507 at stage 515, which may iterate through each individual data point in the point cloud data 210 (e.g., from the sensors 110) and map each data point to a cell 305 of the voxel grid 400 based on the location of the data point (e.g., the i, j, k location) at stage 520. For example, in the case of the 5m x 5m x 5m voxel grid discussed previously, if a data point is detected at a location 2.2m, 3.1m, 4.1m, then the data point will be mapped to the location i=5, j=7, k=9 within the voxel grid (i.e., in cell five (5) for height, in cell seven (7) for width, and in cell nine (9) for depth). As should be appreciated, this process may be completed for each data point, so that the total number of data points in each cell may be determined.

Once each of the data points are arranged within their respective cells 305, at stage 525, an incremental voxel counter 512 may count the number of data points within each of the cells 305. Further, at stage 530, the incremental voxel counter may compare the number of data points within each cell 305 to threshold value (n). In order to determine an occupancy status (e.g., set occupancy, occupied or unoccupied) of each cell 305. As mentioned previously, the threshold value (n) may be adjusted based on a distance of each cell 305 from the sensor 110. For example, as shown in FIG. 6, cells 305 that are further from the sensor 110 may have a lower threshold value (n), while cells 305 that are nearer to the sensor 110 may have a higher threshold value (n). This distance-based parameterization may account for beam divergence of the sensor 110.

In some examples, based on the number of data points in each cell 305, the controller 115 may determine whether each cell (e.g., cell 305) is an occupied cell 340 or an unoccupied cell 320. For example, if the threshold value n=3, but the cell 305 only has two (2) data points, then the cell 305 will be an unoccupied cell 320. Correspondingly, if the threshold value n=3 and the cell 305 includes three (3) or more points, then the cell will be an occupied cell 340.

In one example, once each cell 305 has been determined to either be an occupied cell 340 or an unoccupied cell 320, the decoder stage 535 may begin. For example, at stage 540, a grid iterator 517 may iterate through each occupied cell 320 of the voxel grid and, at stage 545, a centroid point of each cell 320 may be determined. For example, at stage 550, based on the averaged location of the data points within each cell 320, a single centroid point 315 may be generated to replace the multiple data points, which may reduce the overall number of data points within the point cloud (e.g., from the decimated point cloud data 215). At stage 555, the centroid points 315 in the voxel grid may be added to an output array, which at stage 560 may be outputted (e.g., to the guidance, navigation, and control (GN&C) system 105) for further parsing by the controller 115 of the guidance, navigation, and control system 105 (e.g., for use in obstacle detection or SLAM applications). For example, based on the output array, the guidance, navigation, and control system 105 may determine whether an obstacle is within a travel path of the material handling vehicle. **In** some examples, based on the output array, if an obstacle is determined to be in the path of the material handling vehicle, the controller 115 may modify one or more load handling functions of the material handling vehicle. For example, the controller 115 may cause the material handling vehicle to slow down, stop travel, apply the brakes, or other load handling functions. In other examples, based on the output array, if an obstacle is determined not to be in the path of the material handling vehicle, the controller 115 may permit unchanged (e.g., continued) operation of the material handling vehicle (e.g., continue travel or other load handling functions).

As should be appreciated, the use of the voxel grid filter 205 including the density filter 220 may reduce the total number of data points in the decimated point cloud data 215 by about 80 to 95 percent the number of data points in the original point cloud data 210, which may facilitate more efficient (e.g., fastener, requiring less overall compute power, etc.) parsing by the controller 115. In one particular example, the use of the voxel grid filter 205 including the density filter 220 may reduce the total number of data points in the decimated point cloud data 215 by about 90 percent the number of data points in the original point cloud data 210.

As should be appreciated, the above method 500 may be an iterative process that continues throughout operation (e.g., manual, autonomous, etc. operation) of the material handling vehicle 100 to provide a reduction in the amount of point cloud data 210 analyzed by the controller 115 in obstacle detection or SLAM applications.

FIG. 6 shows an example of a voxel map 600 illustrating a distance-based density filtering system 605 for use with the guidance, navigation, and control system 105. In some examples, the distance-based density filtering system 605 includes a series of cells (e.g., voxels) 610 with different threshold values (n) of data points based on the distance from each cell 610 to the sensor 110 (e.g., on the material handling vehicle). For example, cells 610 nearer to the sensor 110 may have a threshold value (n) that is larger than cells 610 farther from the sensor 110 (e.g., to account for divergence of one or more beams 615) from the sensor 110. Put differently, as the beams 615 travel away from the sensor 110 the beams 615 may diverge, which may result in decreased point density at longer ranges. Thus, the distance-based density filtering system 605 can be configured to have a lower sensitivity near to the sensor 110 and a higher sensitivity further from the sensor 110.

In some examples, the threshold value (n) can be set independently for each cell 610 as a function of the distance from the sensor 110. In other words, the threshold value (n) can be adjusted spatially and dynamically based on cell(s) 610 position. For example, one or more cells 620 within a first area 625 (e.g., nearer the sensor 110) may be configured with a first threshold value of data points to be marked as occupied, one or more cells 630 within a second area 635 (e.g., further from the sensor 110 than the first area 625) may be configured with a second threshold value of data points to be marked as occupied, and one or more cells 640 within a third area 645 (e.g., further from the sensor 110 than the first area 625 and the second area 635) may be configured with a third threshold value of data points to be marked as occupied.

In one particular example, the cells 620 within the first area 625 may have a threshold value (n) of three (3) to be marked as an occupied cell. Further, the cells 630 within the second area 635 may have a threshold value (n) of two (2) to be marked as an occupied cell. Finally, the cells 640 within the third area 645 may have a threshold value (n) of one (1) to be marked as an occupied cell.

As should be appreciated, the threshold value (n) for each cell 610 in each area may be set to any value depending on the use case. For example, having a larger threshold value may correspond to a less sensitive voxel grid filter (e.g., less total data points). Correspondingly, a smaller threshold value may correspond to a more sensitive voxel grid filter (e.g., more total data points).

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

### FURTHER EXAMPLES

Example 1. A method of filtering a data set generated by a sensor on a material handling vehicle, the method comprising: receiving a series of data points from the sensor on the material handling vehicle; mapping each data point in the series of data points to a cell of a voxel grid; determining a number of data points within each cell of the voxel grid; comparing the number of data points within each cell of the voxel grid to a threshold value to reduce the number of data points; and when the number of data points within a cell of the voxel grid is below the threshold value, marking the cell of the voxel grid as unoccupied; when the number of data points within a cell of the voxel grid is equal to or above the threshold value, marking the cell of the voxel grid as occupied.

Example 2. The method of Example 1, wherein the threshold value is adjusted based on a distance of each cell from the sensor.

Example 3. The method of Example 2, wherein cells further from the sensor have a lower threshold value than cells nearer to the sensor.

Example 4. The method of any one of Examples 1-3, wherein, when the number of data points within the cell of the voxel grid is below the threshold value, the cell is marked unoccupied even when data points are present within the cell.

Example 5. The method of any one of Examples 1-4, wherein the sensor is a 3D LiDAR sensor.

Example 6. The method of any one of Examples 1-5, further comprising: applying the reduced data set to an obstacle detection system of a material handling vehicle to determine whether an obstacle is within a travel path of the material handling vehicle.

Example 7. The method of Example 6, further comprising: when an obstacle is determined to be within the travel path of the material handling vehicle, modifying one or more load handling functions of the material handling vehicle.

Example 8. The method of any one of Examples 1-7, further comprising: determining a centroid point for each occupied cell based on an average location of data points within the occupied cell; and representing each occupied cell with the centroid point.

Example 9. A guidance, navigation, and control system for a material handling vehicle, the system comprising: a sensor to measure obstacle detection data; and a controller configured to: receive obstacle detection data from the sensor in the form of a series of data points; map each data point in the series of data points to a cell of a voxel grid; determine a number of data points within each cell of the voxel grid; compare the number of data points within each cell of the voxel grid to a predetermined threshold value; and when the number of data points within a cell of the voxel grid is below the threshold value, marking the cell of the voxel grid as unoccupied; when the number of data points within a cell of the voxel grid is equal to or above the threshold value, marking the cell of the voxel grid as occupied.

Example 10. The guidance, navigation, and control system of Example 9, wherein the predetermined threshold value is adjusted based on a distance of each cell from the sensor.

Example 11. The guidance, navigation, and control system of Example 10, wherein cells further from the sensor have a lower predetermined threshold value than cells nearer to the sensor.

Example 12. The guidance, navigation, and control system of any one of Examples 9-11, wherein, when the number of data points within the cell of the voxel grid is below the threshold value, the cell is marked unoccupied even when data points are present within the cell.

Example 13. The guidance, navigation, and control system of any one of Examples 9-12, wherein the sensor is a 3D LiDAR sensor.

Example 14. The guidance, navigation, and control system of any one of Examples 9-13, wherein a centroid point for each occupied cell is determined based on an average location of data points within the occupied cell.

Example 15. The guidance, navigation, and control system of any one of Examples 9-14, wherein the controller is further configured to: output occupied cell data to an obstacle detection system of the material handling vehicle to determine whether an obstacle is within a travel path of the material handling vehicle; and when an obstacle is determined to be within the travel path of the material handling vehicle, modify one or more load handling functions of the material handling vehicle.

Example 16. A non-transitory computer-readable medium storing instructions that, when executed by a processor, cause the processor to perform a method for density-based filtering of point cloud data, the method comprising: receiving point cloud data from one or more sensors; applying a voxel grid filter to the point cloud data to divide the point cloud data into a plurality of cells; determining a number of data points within each cell of the plurality of cells; comparing the number of data points within each cell to a variable threshold value, the variable threshold value being based on a distance of each cell from the one or more sensors; designating cells with a number of data points equal to or greater than the threshold value as occupied cells; and generating a reduced point cloud data set by representing each occupied cell with a single data point.

Example 17. The non-transitory computer-readable medium of Example 16, wherein cells further from the one or more sensors have a lower predetermined threshold value than cells nearer to the one or more sensors.

Example 18. The non-transitory computer-readable medium of any one of Examples 16-17, wherein, when the number of data points within the cell of the voxel grid is below the threshold value, the cell is marked unoccupied even when data points are present within the cell.

Example 19. The non-transitory computer-readable medium of any one of Examples 16-18, further comprising: applying the reduced data set to an obstacle detection system of a material handling vehicle.

Example 20. The non-transitory computer-readable medium of any one of Examples 16-19, wherein the reduced point cloud data set has about 5-20 percent of the data points in the received point cloud data.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In some examples, aspects of the disclosed technology, including computerized implementations of methods according to the disclosed technology, can be implemented as a system, method, apparatus, or article of manufacture using standard programming or engineering techniques to produce software, firmware, hardware, or any combination thereof to control a processor device (e.g., a serial or parallel general purpose or specialized processor chip, a single- or multi-core chip, a microprocessor, a field programmable gate array, any variety of combinations of a control unit, arithmetic logic unit, and processor register, and so on), a computer (e.g., a processor device operatively coupled to a memory), or another electronically operated controller to implement aspects detailed herein. Accordingly, for example, aspects of the disclosed technology can be implemented as a set of instructions, tangibly embodied on a non-transitory computer-readable media, such that a processor device can implement the instructions based upon reading the instructions from the computer-readable media. Some examples of the disclosed technology can include (or utilize) a control device such as an automation device, a special purpose or general purpose computer including various computer hardware, software, firmware, and so on, consistent with the discussion below. As specific examples, a control device can include a processor, a microcontroller, a field-programmable gate array, a programmable logic controller, logic gates etc., and other typical components that are known in the art for implementation of appropriate functionality (e.g., memory, communication systems, power sources, user interfaces and other inputs, etc.). In some examples, a control device can include a centralized hub controller that receives, processes and (re)transmits control signals and other data to and from other distributed control devices (e.g., an engine controller, an implement controller, a drive controller, etc.), including as part of a hub-and-spoke architecture or otherwise.

The term "article of manufacture" as used herein is intended to encompass a computer program accessible from any computer-readable device, carrier (e.g., non-transitory signals), or media (e.g., non-transitory media). For example, computer-readable media can include but are not limited to magnetic storage devices (e.g., hard disk, floppy disk, magnetic strips, and so on), optical disks (e.g., compact disk (CD), digital versatile disk (DVD), and so on), smart cards, and flash memory devices (e.g., card, stick, and so on). Additionally, it should be appreciated that a carrier wave can be employed to carry computer-readable electronic data such as those used in transmitting and receiving electronic mail or in accessing a network such as the Internet or a local area network (LAN). Those skilled in the art will recognize that many modifications may be made to these configurations without departing from the scope or spirit of the claimed subject matter.

Certain operations of methods according to the disclosed technology, or of systems executing those methods, may be represented schematically in the FIGS., or otherwise discussed herein. Unless otherwise specified or limited, representation in the FIGS. of particular operations in particular spatial order may not necessarily require those operations to be executed in a particular sequence corresponding to the particular spatial order. Correspondingly, certain operations represented in the FIGS., or otherwise disclosed herein, can be executed in different orders than are expressly illustrated or described, as appropriate for particular examples of the disclosed technology. Further, in some examples, certain operations can be executed in parallel, including by dedicated parallel processing devices, or separate computing devices configured to interoperate as part of a large system.

As used herein in the context of computer implementation, unless otherwise specified or limited, the terms "component," "system," "module," "block," "device," "stage," and the like are intended to encompass part or all of computer-related systems that include hardware, software, a combination of hardware and software, or software in execution. For example, a component may be, but is not limited to being, a processor device, a process being executed (or executable) by a processor device, an object, an executable, a thread of execution, a computer program, or a computer. By way of illustration, both an application running on a computer and the computer can be a component. One or more components (or system, module, and so on) may reside within a process or thread of execution, may be localized on one computer, may be distributed between two or more computers or other processor devices, or may be included within another component (or system, module, and so on).

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

Additionally, unless otherwise specified or limited, the terms "about" and "approximately," as used herein with respect to a reference value, refer to variations from the reference value of plus or minus 15 percent or less, inclusive of the endpoints of the range. Similarly, the term "substantially equal" (and the like) as used herein with respect to a reference value refers to variations from the reference value of less than plus or minus 30 percent, inclusive. Where specified, "substantially" can indicate in particular a variation in one numerical direction relative to a reference value. For example, "substantially less" than a reference value (and the like) indicates a value that is reduced from the reference value by 30 percent or more, and "substantially more" than a reference value (and the like) indicates a value that is increased from the reference value by 30 percent or more.

The previous description of the disclosed embodiments is provided to enable any person skilled in the art to make or use the invention. Given the benefit of this disclosure, various modifications to these embodiments will be readily apparent to those skilled in the art, and the principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A method (500) of filtering a data set generated by a sensor (110) on a material handling vehicle (100), the method (500) comprising:
receiving a series of data points (310) from the sensor (110) on the material handling vehicle (105);
mapping each data point in the series of data points (310) to a cell (305) of a voxel grid (300);
determining a number of data points within each cell (305) of the voxel grid (300);
comparing the number of data points within each cell (305) of the voxel grid (300) to a threshold value to reduce the number of data points; and
when the number of data points within a cell (305) of the voxel grid (300) is below the threshold value, marking the cell (320) of the voxel grid (300) as unoccupied;
when the number of data points within a cell (305) of the voxel grid (300) is equal to or above the threshold value, marking the cell (340) of the voxel grid (300) as occupied.

2. The method (500) of claim 1, wherein the threshold value is adjusted based on a distance of each cell (305) from the sensor (110).

3. The method (500) of claim 2, wherein cells further from the sensor (110) have a lower threshold value than cells (305) nearer to the sensor (110).

4. The method (500) of any of the claims above, wherein, when the number of data points within the cell (305) of the voxel grid (300) is below the threshold value, the cell (320) is marked unoccupied even when data points (310) are present within the cell (305).

5. The method (500) of any of the claims above, wherein the sensor is a 3D LiDAR sensor.

6. The method (500) of any of the claims above, further comprising:
applying the reduced data set to an obstacle detection system of a material handling vehicle (100) to determine whether an obstacle (120) is within a travel path of the material handling vehicle (100).

7. The method (500) of claim 6, further comprising:
when an obstacle (120) is determined to be within the travel path of the material handling vehicle (100), modifying one or more load handling functions of the material handling vehicle (100).

8. The method (500) of any of the claims above, further comprising:
determining a centroid point (315) for each occupied cell (340) based on an average location of data points (310) within the occupied cell (340); and
representing each occupied cell (340) with the centroid point (315).

9. A guidance, navigation, and control system (105) for a material handling vehicle (100), the system (105) comprising:
a sensor (110) to measure obstacle detection data; and
a controller (115) configured to:
receive obstacle detection data from the sensor (110) in the form of a series of data points (310);
map each data point in the series of data points (310) to a cell (305) of a voxel grid (300);
determine a number of data points within each cell (305) of the voxel grid (300);
compare the number of data points within each cell (305) of the voxel grid (300) to a predetermined threshold value; and
when the number of data points within a cell (305) of the voxel grid (300) is below the threshold value, marking the cell (320) of the voxel grid (300) as unoccupied;
when the number of data points within a cell (305) of the voxel grid (300) is equal to or above the threshold value, marking the cell (340) of the voxel grid (300) as occupied.

10. The guidance, navigation, and control system (105) of claim 9, wherein the predetermined threshold value is adjusted based on a distance of each cell (305) from the sensor (110).

11. The guidance, navigation, and control system (105) of claim 10, wherein cells (305) further from the sensor (110) have a lower predetermined threshold value than cells (305) nearer to the sensor (110).

12. The guidance, navigation, and control system (105) of any of the claims 9 - 11, wherein, when the number of data points within the cell (305) of the voxel grid (300) is below the threshold value, the cell (320) is marked unoccupied even when data points are present within the cell (320).

13. The guidance, navigation, and control system (105) of any of the claims 9 - 12, wherein the sensor (110) is a 3D LiDAR sensor.

14. The guidance, navigation, and control system of (105) any of the claims 9 - 13, wherein a centroid point (315) for each occupied cell (340) is determined based on an average location of data points within the occupied cell (340).

15. The guidance, navigation, and control system (105) of any of the claims 9 - 14, wherein the controller (115) is further configured to:
output occupied cell data to an obstacle detection system of the material handling vehicle (100) to determine whether an obstacle (120) is within a travel path of the material handling vehicle (100); and
when an obstacle (120) is determined to be within the travel path of the material handling vehicle (100), modify one or more load handling functions of the material handling vehicle (100).
